# FASCICULE DE BREVET EUROPEEN

(11) **EP 2 537 313 B1**
(45) Date de publication et mention de la délivrance du brevet: **12.08.2015**
(21) Numéro de dépôt: 11705846.1
(22) Date de dépôt: 15.02.2011
(51) Int. Cl.: H04L 29/06

(54) **PROCÉDÉ ET DISPOSITIF POUR FILTRER UNE ATTAQUE DE DENI DE SERVICE**
VERFAHREN UND VORRICHTUNG FÜR DIE FILTERUNG EINES DIENSTBLOCKADE-ANGRIFFS
METHOD AND DEVICE FOR FILTERING A DENIAL-OF-SERVICE ATTACK

(30) Priorité: 17.02.2010 FR 1051122
(43) Date de publication de la demande: 26.12.2012
(73) Titulaire: ALCATEL LUCENT, 92100 Boulogne-Billancourt (FR)
(72) Inventeur: MARTIN, Antony, F-91620 Nozay (FR); PAPILLON, Serge, F-91620 Nozay (FR)
(74) Mandataire: Mouney, Jérôme
(86) Numéro de dépôt international: PCT/EP2011/052250
(87) Numéro de publication internationale: WO 2011/101360

(56) Documents cités:
- EP-A1- 2 109 279
- EP-A1- 2 109 281
- WO-A2-02/33870
- US-A1- 2005 060 582
- US-A1- 2006 010 389

## Description

La présente invention concerne une détection et un filtre d'une attaque de déni de service à l'encontre d'au moins un serveur d'application dans un réseau de télécommunications.

Une attaque de déni de service DoS ("Denial of Service" en anglais) est difficile à contrer, notamment en cas de transmission en grand nombre de messages, par exemple au niveau du protocole HTTP ("HyperText Transfer Protocol" en anglais) et SIP ("Session Initiation Protocol" en anglais).

Une réaction face à ce type d'attaque est de demander au fournisseur d'accès à Internet de bloquer tous les trafics destinés aux serveurs victimes de l'attaque, pour préserver l'intégrité des serveurs.

Les attaques de déni de service deviennent plus faciles à réaliser par l'utilisation de réseaux de machines malveillantes ou "BotNet" ("roBot Network" en anglais) qui désignent des ensembles d'automates logiciels reliés entre eux dans un réseau de télécommunications, installés sur des machines informatiques reliées au réseau. Ce type de réseau peut être contrôlé à distance par des entités masquées, notamment à des fins criminelles, par exemple pour envoyer des courriers électroniques de type "spam" ou effectuer des attaques de type "dénis de service". Une machine malveillante est par exemple un ordinateur qui a été infecté par un virus, et l'ordinateur agit pour le compte du réseau de machines malveillantes à l'insu de l'utilisateur de l'ordinateur. Une machine malveillante peut être aussi appelée une machine "zombie" et un réseau de machines malveillantes peut être assimilé à un virus distribué sur des machines fonctionnant à l'insu de leurs utilisateurs.

Par exemple, un attaquant peut ordonner des machines malveillantes d'émettre une grande quantité de paquets "SIP INVITE" vers un server SIP, inondant ainsi ce dernier depuis autant d'adresses IP ("Internet Protocol" en anglais) sources que de machines malveillantes sous le contrôle de l'attaquant.

La nature distribuée des réseaux de machines malveillantes rend presque impossible l'utilisation de filtres basés sur les adresses IP sources sans avoir un taux élevé de faux positifs. Il est cependant inacceptable d'avoir un taux élevé de faux positifs, qui conduirait par exemple à bloquer des utilisateurs légitimes qui essaient d'établir des appels en utilisant un serveur SIP de leur fournisseur de service multimédia.

Par ailleurs, pour protéger l'intégrité d'un serveur qui est la cible d'attaques de déni de service, il est possible d'arrêter le serveur ou de bloquer une majeure partie du trafic à destination du serveur, mais cette solution n'assure plus une qualité du service délivré par le serveur et provoque un déni de service.

L'état de la technique est reflété dans le document WO 02/33870 A2 qui porte sur des opérations de filtrage lors d'une attaque de déni de service utilisant des informations géographiques.

Un objectif de l'invention est de remédier aux inconvénients précédents en proposant une méthode pour détecter et filtrer des attaques de déni de service à l'encontre d'un serveur tout en maintenant au mieux le service délivré par le serveur.

L'invention est définie dans les revendications indépendantes 1, 5 et 6.

Pour atteindre cet objectif, un procédé pour filtrer une attaque de déni de service à l'encontre d'un serveur délivrant un service dans un réseau de télécommunications, comprend les étapes suivantes :
capturer des requêtes à destination du serveur,
extraire d'au moins une partie des requêtes capturées des adresses sources dont proviennent les requêtes,
associer des zones géographiques respectivement à des groupes d'adresses sources extraites,
produire une liste de groupes d'adresses sources à filtrer en fonction des groupes d'adresses sources associés aux zones géographiques, du type de service délivré par le serveur et d'un seuil correspondant à un nombre minimal d'adresses sources à filtrer pour éviter la congestion du serveur, et
appliquer des règles de filtre aux adresses sources contenues dans la liste afin de bloquer les requêtes en provenance de ces adresses sources et à destination du serveur.

Avantageusement, des filtres sont appliqués à des adresses sources suspicieuses, ce que permet à une service de fonctionnel normalement pour une majorité d'utilisateurs légitimes même pendant une attaque de déni de service de forte intensité. Ainsi, le service délivré par le serveur peut être maintenu pour une majeure partie d'utilisateurs légitimes, tout en réduisant de manière significative le nombre de requêtes considérées illégitimes à destination du serveur.

Selon une autre caractéristique de l'invention, le procédé peut comprendre en outre une localisation d'une position géographique relative à chacune des adresses sources extraites, et une production d'au moins un groupe d'adresses sources dont les positions géographiques appartiennent à une même zone géographique, afin d'associer les zones géographiques respectivement aux groupes d'adresses sources.

Selon d'autres caractéristiques de l'invention, la liste de groupes d'adresses sources à filtrer peut être produite en outre en fonction de quotas de répartition, correspondant à des proportions maximales d'adresses sources à filtrer pour chaque zone géographique, et la liste de groupes peut être produite en outre en fonction de la langue du service délivré par le serveur.

Selon une autre caractéristique de l'invention, les adresses sources peuvent être extraites d'échantillons des requêtes capturées, le taux d'échantillonnage étant ajusté dynamiquement en fonction du débit des requêtes à destination du serveur.

Selon une autre caractéristique de l'invention, le procédé peut comprendre en outre une détermination d'une topologie entre une partie des adresses sources et le serveur, afin de détecter des adresses sources considérées comme dangereuses et d'inclure ces dernières dans la liste.

Selon une autre caractéristique de l'invention, le procédé peut comprendre en outre une association des zones géographiques à des indications de fuseau horaire, afin d'identifier les zones géographiques qui sont situées dans une zone "réveillée" ou "endormie" par rapport au type de service délivré par le serveur.

L'invention concerne également un dispositif pour filtrer une attaque de déni de service à l'encontre d'un serveur dans un réseau de télécommunications, comprenant :
des moyens pour capturer des requêtes à destination du serveur,
des moyens pour extraire d'au moins une partie des requêtes capturées des adresses sources dont proviennent les requêtes,
des moyens pour associer des zones géographiques respectivement à des groupes d'adresses sources extraites,
des moyens pour produire une liste de groupes d'adresses sources à filtrer en fonction des groupes d'adresses sources associés aux zones géographiques, du type de service délivré par le serveur et d'un seuil correspondant à un nombre minimal d'adresses sources à filtrer pour éviter la congestion du serveur, et
des moyens pour appliquer des règles de filtre aux adresses sources contenues dans la liste afin de bloquer les requêtes en provenance de ces adresses sources et à destination du serveur.

L'invention se rapporte encore à un programme d'ordinateur apte à être mis en oeuvre dans un dispositif, ledit programme comprenant des instructions qui, lorsque le programme est exécuté dans ledit dispositif, réalisent les étapes selon le procédé de l'invention.

La présente invention et les avantages qu'elle procure seront mieux compris au vu de la description ci-après faite en référence aux figures annexées, dans lesquelles :
- la figure 1 est un bloc-diagramme schématique d'un dispositif de filtre d'attaques de déni de service selon une réalisation de l'invention, et
- la figure 2 est un algorithme d'un procédé pour filtrer des attaques de déni de service selon une réalisation de l'invention.

L'invention est relative à une détection et un filtre d'attaques de déni de service à l'encontre d'un serveur d'application, notamment dans le contexte d'attaques à haut débit de type "inondation" ("flooding" en anglais), comprenant un mélange de trafics légitimes et dangereux.

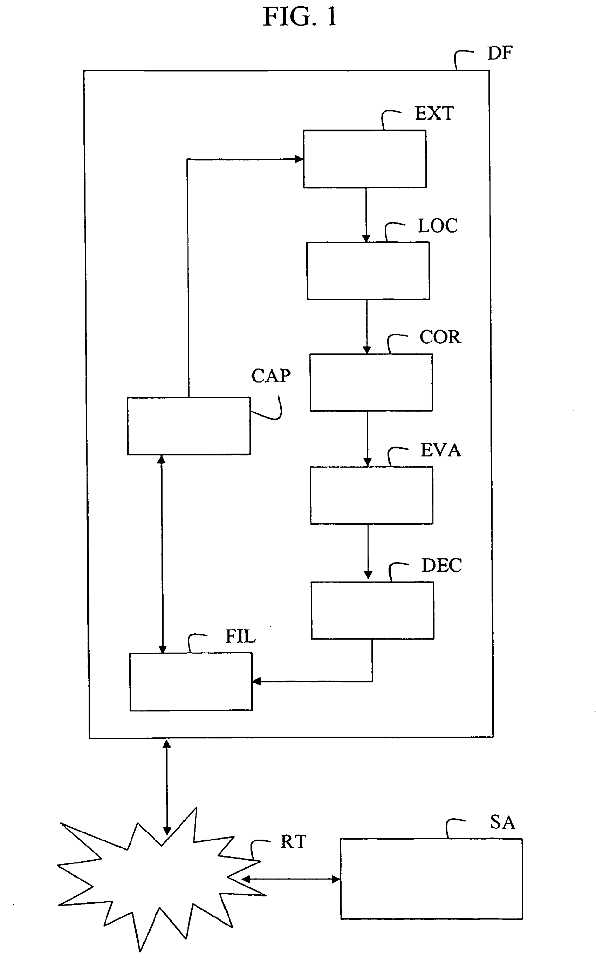

En référence à la figure 1, un dispositif de filtre DF est apte à inspecter des communications à destination d'un serveur d'application SA à travers un réseau de télécommunications RT.

Le réseau de télécommunications RT peut être un réseau filaire ou sans fil, ou une combinaison de réseaux filaires et de réseaux sans fil.

Selon un exemple, le réseau de télécommunications RT est un réseau de paquets à haut débit de type IP ("Internet Protocol" en anglais), tel que l'internet ou un intranet.

Le serveur d'application SA est un serveur délivrant un ou plusieurs services accessibles via le réseau de télécommunications RT. Par exemple, le serveur d'application SA est un serveur qui héberge un ou plusieurs sites web utilisant le protocole HTTP, ou est un serveur de média ou de signalisation utilisant le protocole SIP.

Le dispositif de filtre DF comprend un module de capture CAP, un module d'extraction EXT, un module de localisation LOC, un module de corrélation COR, un module d'évaluation EVA, un module de décision DEC, et un module de filtre FIL.

Dans la suite de la description, le terme module peut désigner un dispositif, un logiciel ou une combinaison de matériel informatique et de logiciel, configuré pour exécuter au moins une tâche particulière.

A titre d'exemples, le dispositif de filtre DF peut être inclus dans un pare-feu, dans un système de détection d'intrusion IDS ("Intrusion Détection system" en anglais), un système de prévention d'intrusion IPS ("Intrusion Prévention System" en anglais), ou encore dans un routeur. Le dispositif de filtre DF est placé en écoute, éventuellement en coupure, par rapport au trafic échangé avec le serveur d'application SA.

Si le dispositif de filtre DF n'est pas placé en coupure, mais en écoute par rapport au trafic échangé avec le serveur d'application SA, le module de filtre FIL est implémenté dans un dispositif externe au dispositif de filtre DF, situé en coupure par rapport à ce dernier. Par exemple, le dispositif de filtre DF est inclus dans un système de détection d'intrusion IDS et le module de filtre FIL est implémenté dans un pare-feu, le système de détection d'intrusion et le pare-feu étant aptes à communiquer entre eux par liaison directe ou à travers le réseau de télécommunications RT.

Le module de capture CAP surveille le débit des requêtes envoyées à destination du serveur d'application SA, pour identifier si un seuil de débit est atteint ou dépassé. Plusieurs seuils de débit peuvent être utilisés pour distinguer le degré de dangerosité des attaques de déni de service. Par exemple, un seuil de débit définit un nombre maximal de requêtes par seconde qui peuvent être reçues par le serveur d'application SA.

Le module d'extraction EXT est averti par le module de capture CAP lorsqu'un seuil de débit est dépassé. Le module d'extraction EXT extrait des requêtes capturées les adresses IP sources dont proviennent les requêtes.

Optionnellement, l'extraction des adresses sources peut être effectuée par échantillonnage, sur une partie des requêtes capturées. Le taux d'échantillonnage peut être ajusté quasiment en temps réel en fonction de l'intensité courante de l'attaque.

Le module de localisation LOC analyse les adresses sources extraites par le module d'extraction EXT, et localise chacune des adresses sources.

Par exemple, la localisation est basée sur une technique de type Subnet ou GeoIP. Optionnellement, la localisation est basée sur une combinaison de plusieurs techniques pour éviter d'éventuelles erreurs de localisation.

La combinaison des techniques dépend de l'intensité courante de l'attaque puisque si le débit de l'attaque est trop élevé, la corrélation de différentes localisations prendrait trop de temps.

Optionnellement, le module de localisation LOC détermine une topologie entre les adresses sources et le serveur d'application SA, par exemple au moyen d'une technique de type "traceroute" qui détermine notamment le nombre de routeurs et le nombre de systèmes autonomes entre une adresse source et le serveur d'application SA.

Des informations de localisation et de topologie peuvent être combinées afin d'identifier des anomalies liées à une attaque provenant d'une adresse source et utilisant des techniques de "tunneling" ou de "rerouting" qui empêchent la localisation exacte de l'adresse source.

En fonction de contraintes de performances et de l'intensité d'une attaque de déni de service, une analyse de localisation peut être effectuée seule ou en combinaison avec une analyse de topologie, sur une partie ou la totalité des requêtes à destination du serveur d'application.

Le module de localisation LOC détermine un couple comprenant l'adresse source et la localisation précédemment déterminée. Le module de localisation LOC détermine des groupes d'adresses sources et associe ces dernières respectivement à des zones géographiques. Par exemple, un groupe d'adresses sources est associé à un continent, un pays, une région, ou encore à une ville.

La granularité des zones géographiques peut dépendre du type de service délivré par le serveur d'application SA.

Le module de corrélation COR combine les informations de localisations et/ou de zones géographiques avec des indications de fuseau horaire, afin d'identifier quelles zones géographiques, et donc quelles adresses sources, sont considérées être dans une zone "réveillée" ou "endormie", par exemple d'un point de vue relatif à une journée de travail, et par rapport au type de service délivré par le serveur d'application.

Par exemple, des zones "réveillées" sont plus légitimes à envoyer du trafic à un serveur d'application par rapport à des zones "endormies".

Des pondérations peuvent être attribuées à des zones géographiques pour différencier certaines zones potentiellement malicieuses, pour prendre en compte la nature distribuée des réseaux de machines malveillantes qui peuvent comprendre des machines réparties dans le monde.

Optionnellement, selon les ressources disponibles et les besoins de filtre, d'autres informations peuvent être utilisées pour enrichir le filtre, telle que la langue parlée dans la zone géographiques et des propriétés du service délivré par le serveur d'application, dont la langue du service délivré par le serveur d'application. Selon un exemple, pour un serveur d'application hébergeant un site uniquement en allemand, un flux important de requêtes provenant d'Amérique du Sud peut être considéré comme douteux. Selon un autre exemple, pour un serveur d'application hébergeant un site de vente d'un objet uniquement en Europe, un flux important de requêtes provenant de Chine peut être considéré comme douteux.

Le module d'évaluation EVA utilise les résultats des modules de localisation et de corrélation pour produire des listes de groupes d'adresses sources potentiellement dangereuses, par exemple sous forme de listes noires.

Le module d'évaluation EVA détermine un seuil de filtre correspondant à un nombre minimal d'adresses sources à filtrer pour éviter la congestion du serveur d'application victime d'une attaque de déni de service.

Le seuil de filtre peut être ajusté quasiment en temps réel en fonction de l'intensité courante de l'attaque.

Le module de décision DEC prend en compte les résultats fournis par le module de corrélation COR et le module d'évaluation EVA. Notamment, le module de décision DEC produit une liste finale d'adresses sources à filtrer, en fonction des groupes d'adresses sources associés respectivement à des zones géographiques auxquelles sont optionnellement attribuées des pondérations, et en fonction du seuil de filtre déterminé précédemment.

Optionnellement, la liste finale est produite en outre en fonction de quotas de répartition, correspondant à des proportions maximales d'adresses sources pour chaque zone géographique, c'est-à-dire pour chaque groupe d'adresses sources. Par exemple, si le serveur d'application héberge un site gouvernemental, les quotas de répartition sont proches de zéro par rapport aux zones géographiques recouvrant le pays associé au site gouvernemental, tandis que les quotas de répartition sont très élevés par rapport à toutes les autres zones géographiques.

Le module de filtre FIL applique des règles de filtre aux adresses sources contenues dans la liste finale, afin notamment de bloquer des requêtes issues de ces adresses sources. Le module de filtre FIL adapte dynamiquement les règles de filtre en fonction d'informations fournies par le module de capture CAP, concernant notamment le débit des requêtes envoyées à destination du serveur d'application SA.

Le module de filtre FIL peut également arrêter le filtre lorsqu'il est constaté que le serveur d'application SA est de nouveau en fonctionnement normal, par exemple lorsque le débit du trafic est en dessous du seuil de débit défini par le module de capture CAP.

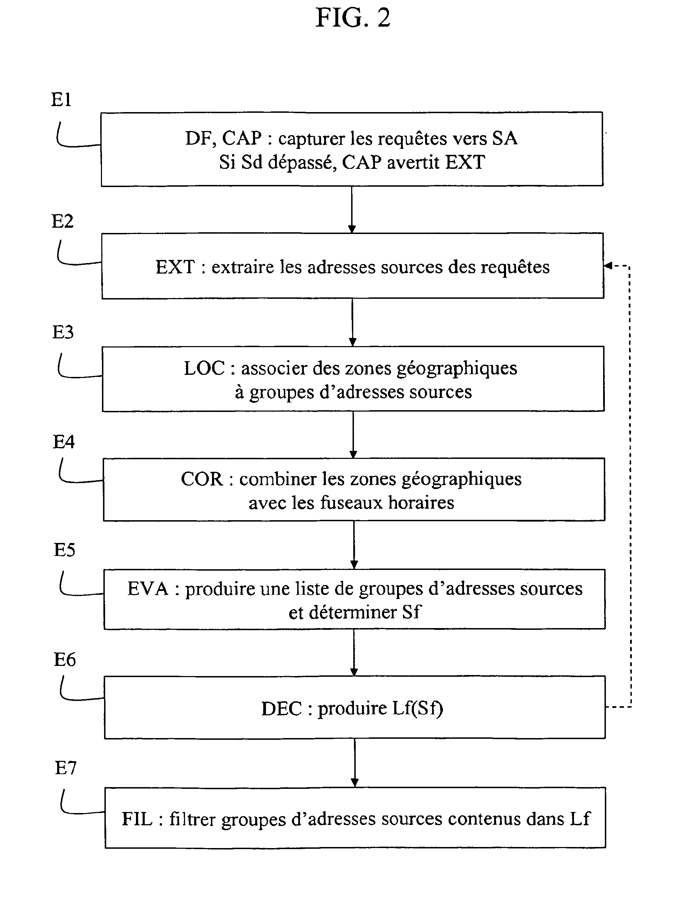

En référence à la figure 2, un procédé pour filtrer des attaques de déni de service selon une réalisation de l'invention comprend des étapes E1 à E7 exécutées dans le dispositif de filtre DF.

A l'étape E1, le module de capture CAP capture toutes les requêtes à destination du serveur d'application SA et surveille le débit de ces requêtes.

Si un seuil Sd de débit est dépassé, le module de capture avertit le module d'extraction EXT. Lorsqu'un seuil Sd de débit est dépassé, le module de capture CAP détecte que le serveur d'application est victime d'une attaque de type déni de service. Il est ainsi supposé que les étapes suivantes sont effectuées tant que le seuil Sd de débit est dépassé.

A l'étape E2, le module d'extraction EXT extrait, à partir d'au moins une partie des requêtes capturées, les adresses IP sources qui sont contenues dans les requêtes et qui sont susceptibles d'être à l'origine de l'attaque.

Dans un premier temps, l'extraction des adresses sources est effectuée par échantillonnage, c'est-à-dire sur une partie des requêtes capturées. Le taux d'échantillonnage peut être ajusté dynamiquement en fonction de l'intensité courante de l'attaque, c'est-à-dire en fonction du débit des requêtes à destination du serveur d'application SA.

Dans une variante, s'il n'y a pas de contraintes de performance, l'extraction des adresses sources peut être effectuée sur toutes les requêtes capturées.

A l'étape E3, le module de localisation LOC analyse les adresses sources extraites, et localise une position géographique relative à chacune des adresses sources extraites. Le module de localisation LOC associe ainsi une position géographique à chaque adresse source. Le module de localisation LOC produit au moins un groupe d'adresses sources dont les positions géographiques appartiennent à une même zone géographique, cette dernière pouvant être à titre d'exemple un continent, un pays, une région, ou encore à une ville. Le module de localisation LOC détermine ainsi au moins un groupe d'adresses sources et associe une zone géographique à chaque groupe d'adresses sources.

Optionnellement, le module de localisation LOC détermine une topologie entre une partie des adresses sources et le serveur d'application SA, par exemple en évaluant le nombre de routeurs et le nombre de systèmes autonomes entre une adresse source et le serveur d'application SA.

A l'étape E4, le module de corrélation COR associe les informations de positions géographiques et/ou de zones géographiques à des indications de fuseau horaire, afin d'identifier les zones géographiques qui sont situées dans une zone "réveillée" ou "endormie", notamment par rapport à la position géographique du serveur d'application et au service délivré par le serveur d'application.

Optionnellement, le module de corrélation COR peut prendre en compte la langue parlée dans la zone géographiques et des propriétés du service délivré par le serveur d'application.

Le module de corrélation COR peut attribuer des pondérations aux zones géographiques et par conséquent aux groupes d'adresses sources associés aux zones géographiques, pour différencier le degré de dangerosité des adresses sources associées aux zones géographiques.

Selon un exemple, le serveur d'application délivre un service de vente en ligne pour les pays d'Europe uniquement. Les clients potentiels peuvent être identifiés géographiquement et temporellement. Il peut être considéré que le service est légitimement accédé dans un intervalle de temps entre 08h00 et 22h00 d'un même fuseau horaire par des personnes résidant en Europe. Par conséquent, des requêtes émises depuis des adresses sources associées à des zones géographiques distinctes de l'Europe pourront être considérées comme dangereuses. De même, des requêtes émises depuis l'Europe en dehors de l'intervalle de temps pourront être considérées comme dangereuses. Des faibles pondérations peuvent être attribuées aux zones géographiques peu éloignées de l'Europe, tandis que de fortes pondérations peuvent être attribuées aux zones géographiques plus éloignées de l'Europe. Par ailleurs, si le service est délivré uniquement en français, des pondérations plus faibles peuvent être attribuées aux zones géographiques francophones.

A l'étape E5, le module d'évaluation EVA produit une liste de groupes d'adresses sources potentiellement dangereuses, par exemple sous forme de listes noires, en fonction des groupes d'adresses sources associés respectivement à des zones géographiques et auxquels sont optionnellement attribués des pondérations, et en fonction du type de service délivré par le serveur d'application.

Le module d'évaluation EVA détermine un seuil Sf de filtre correspondant à un nombre minimal d'adresses sources à filtrer pour éviter la congestion du serveur d'application. Le seuil de filtre peut être ajusté dynamiquement en fonction de l'intensité courante de l'attaque, en collaboration avec le module de capture CAP.

A l'étape E6, le module de décision DEC produit une liste finale Lf de groupes d'adresses sources à filtrer, en fonction des groupes d'adresses sources associés respectivement à des zones géographiques, et auxquels sont optionnellement attribuées des pondérations, et en fonction du seuil Sf de filtre. Optionnellement, la liste finale est produite en outre en fonction de quotas de répartition, correspondant à des proportions maximales d'adresses sources à filtrer pour chaque zone géographique.

Si la liste finale Lf d'adresses sources à filtrer ne contient pas un nombre minimal d'adresses sources à filtrer selon le seuil de filtre Sf, le procédé est réitéré depuis l'étape E2 jusqu'à l'étape E6 pour préciser les informations de localisation relatives aux adresses sources.

Par exemple, si dans un premier temps, l'extraction des adresses sources à l'étape E2 a été effectuée par échantillonnage, elle peut être ensuite effectuée sur toutes les requêtes capturées.

Si la liste finale Lf d'adresses sources à filtrer ne contient pas un nombre minimal d'adresses sources à filtrer à l'étape E6 de la nouvelle itération du procédé, le procédé est à nouveau réitéré depuis l'étape E3 jusqu'à l'étape E6 pour ajouter des informations de topologie relatives aux adresses sources. Par exemple, à l'étape E3, le module de localisation LOC détermine une topologie entre les adresses sources et le serveur d'application SA, et combine les informations de localisation et de topologie afin d'identifier des anomalies liées à une attaque provenant d'une adresse source en apparence légitime, ce qui permet de détecter de nouvelles adresses sources considérées comme dangereuses et de les ajouter à la liste finale.

Des informations de localisation et de topologie peuvent être combinées afin d'identifier des anomalies liées à une attaque provenant d'une adresse source et utilisant des techniques de "tunneling" ou de "rerouting" qui empêchent la localisation exacte de l'adresse source.

A l'étape E7, le module de filtre FIL applique des règles de filtre aux groupes d'adresses sources contenus dans la liste finale Lf, afin notamment de bloquer des requêtes issues de ces adresses sources. Les règles de filtre peuvent être ajustées dynamiquement en fonction de l'intensité actuelle de l'attaque, en collaboration avec le module de capture CAP.

A titre d'exemples, les groupes d'adresses sources associés aux pondérations les plus élevées sont bloqués en premier, et d'autres groupes d'adresses sources associés à des pondérations les plus faibles seront bloqués si l'intensité de l'attaque augmente.

Lorsque le débit des requêtes à destination du serveur d'application est en dessous du seuil de débit défini par le module de capture CAP, le module de filtre arrête le filtre afin qu'aucune requête ne soit plus bloquée. L'arrêt du filtrage peut être progressif et inverse de l'activation en fonction des pondérations initialement utilisées pour l'activation des filtres.

L'invention décrite ici concerne un procédé et un dispositif pour filtrer des attaques de déni de service. Selon une implémentation de l'invention, les étapes du procédé de l'invention sont déterminées par les instructions d'un programme d'ordinateur incorporé dans un dispositif, tel que le dispositif de filtre DF. Le programme comporte des instructions de programme, qui lorsque ledit programme est chargé et exécuté dans le dispositif, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé pour filtrer une attaque de déni de service à l'encontre d'un serveur (SA) délivrant un service dans un réseau de télécommunications (RT), le procédé comprenant les étapes suivantes :
capturer (E1) des requêtes à destination du serveur,
extraire (E2) d'au moins une partie des requêtes capturées des adresses sources dont proviennent les requêtes, les adresses sources étant extraites d'échantillons des requêtes capturées et le taux d'échantillonnage étant ajusté dynamiquement en fonction du débit des requêtes à destination du serveur,
associer (E3) des zones géographiques respectivement à des groupes d'adresses sources extraites et à des indications de fuseau horaire, afin d'identifier les zones géographiques qui sont situées dans une zone "réveillée" ou "endormie" par rapport au type de service délivré par le serveur,
produire (E6) une liste (Lf) d'adresses sources à filtrer en fonction des groupes d'adresses sources associés aux zones géographiques et à des indications de fuseau horaire, du type de service délivré par le serveur et d'un seuil (Sf) correspondant à un nombre minimal d'adresses sources à filtrer pour éviter la congestion du serveur (SA) et en outre en fonction de la langue du service délivré par le serveur,
appliquer (E7) des règles de filtre aux adresses sources contenues dans la liste afin de bloquer les requêtes en provenance de ces adresses sources et à destination du serveur.

2. Procédé conforme à la revendication 1, comprenant en outre une localisation d'une position géographique relative à chacune des adresses sources extraites, et une production d'au moins un groupe d'adresses sources dont les positions géographiques appartiennent à une même zone géographique, afin d'associer les zones géographiques respectivement aux groupes d'adresses sources.

3. Procédé conforme à la revendication 1 ou 2, selon lequel la liste (Lf) de groupes d'adresses sources à filtrer est produite en outre en fonction de quotas de répartition, correspondant à des proportions maximales d'adresses sources à filtrer pour chaque zone géographique.

4. Procédé conforme à l'une des revendications 1 à 3, comprenant en outre une détermination d'une topologie entre une partie des adresses sources et le serveur, afin de détecter des adresses sources considérées comme dangereuses et d'inclure ces dernières dans la liste.

5. Dispositif (SD) pour filtrer une attaque de déni de service à l'encontre d'un serveur (SA) dans un réseau de télécommunications (RT), comprenant :
des moyens (CAP) pour capturer des requêtes à destination du serveur,
des moyens (EXT) pour extraire d'au moins une partie des requêtes capturées des adresses sources dont proviennent les requêtes, les adresses sources étant extraites d'échantillons des requêtes capturées et le taux d'échantillonnage étant ajusté dynamiquement en fonction du débit des requêtes à destination du serveur,
des moyens (LOC) pour associer des zones géographiques respectivement à des groupes d'adresses sources extraites et à des indications de fuseau horaire, afin d'identifier les zones géographiques qui sont situées dans une zone "réveillée" ou "endormie" par rapport au type de service délivré par le serveur,
des moyens (DEC) pour produire une liste (Lf) d'adresses sources à filtrer en fonction des groupes d'adresses sources associés aux zones géographiques et à des indications de fuseau horaire, du type de service délivré par le serveur et d'un seuil (Sf) correspondant à un nombre minimal d'adresses sources à filtrer pour éviter la congestion du serveur (SA) et en outre en fonction de la langue du service délivré par le serveur,
des moyens (FIL) pour appliquer des règles de filtre aux adresses sources contenues dans la liste afin de bloquer les requêtes en provenance de ces adresses sources et à destination du serveur.

6. Programme d'ordinateur apte à être mis en oeuvre dans un dispositif (DF) pour filtrer une attaque de déni de service à l'encontre d'un serveur (SA) dans un réseau de télécommunications (RT), ledit programme comprenant des instructions qui, lorsque le programme est chargé et exécuté dans ledit dispositif, réalisent les étapes suivantes :
capturer (E1) des requêtes à destination du serveur,
extraire (E2) d'au moins une partie des requêtes capturées des adresses sources dont proviennent les requêtes, les adresses sources étant extraites d'échantillons des requêtes capturées et le taux d'échantillonnage étant ajusté dynamiquement en fonction du débit des requêtes à destination du serveur,
associer (E3) des zones géographiques respectivement à des groupes d'adresses sources extraites et à des indications de fuseau horaire, afin d'identifier les zones géographiques qui sont situées dans une zone "réveillée" ou "endormie" par rapport au type de service délivré par le serveur,
produire (E6) une liste (Lf) d'adresses sources à filtrer en fonction des groupes d'adresses sources associés aux zones géographiques et à des indications de fuseau horaire, du type de service délivré par le serveur et d'un seuil (Sf) correspondant à un nombre minimal d'adresses sources à filtrer pour éviter la congestion du serveur (SA) et en outre en fonction de la langue du service délivré par le serveur,
appliquer (E7) des règles de filtre aux adresses sources contenues dans la liste afin de bloquer les requêtes en provenance de ces adresses sources et à destination du serveur.

## Patentansprüche

1. Verfahren zum Filtern eines Dienstverweigerungsangriffs auf einen Server (SA), der einen Dienst in einem Telekommunikationsnetz (RT) bereitstellt, wobei das Verfahren folgende Schritte umfasst:
Erfassen (E1) von Anforderungen an den Server,
Extrahieren (E2) von Ursprungsadressen, von denen die Anforderungen stammen, von mindestens einem Teil der erfassten Anforderungen, wobei die Ursprungsadressen aus Abtastwerten der erfassten Anforderungen extrahiert werden und die Abtastrate in Abhängigkeit von der Anforderungsrate an den Server dynamisch angepasst wird,
Zuordnen (E3) von geografischen Zonen jeweils zu Gruppen extrahierter Ursprungsadressen und zu Zeitzonenangaben, um die geografischen Zonen zu identifizieren, die sich in einer "wachen" oder "schlafenden" Zone in Bezug auf die Art des von dem Server bereitgestellten Dienstes befinden,
Erstellen (E6) einer Liste (Lf) von Ursprungsadressen, die in Abhängigkeit von den Ursprungsadressgruppen, die den geografischen Zonen und Zeitzonenangaben zugeordnet sind, der Art des von dem Server bereitgestellten Dienstes und einem Grenzwert (Sf) entsprechend einer Mindestanzahl zu filternder Ursprungsadressen zu filtern sind, um eine Überlastung des Servers (SA) zu vermeiden, und weiterhin in Abhängigkeit von der Sprache des von dem Server bereitgestellten Dienstes,
Anwenden (E7) von Filterregeln auf die Ursprungsadressen, die in der Liste enthalten sind, um Anforderungen zu blockieren, die von diesen Ursprungsadressen stammen und an den Server gerichtet sind.

2. Verfahren nach Anspruch 1, weiterhin umfassend eine Lokalisierung einer geografischen Position bezogen auf jede der extrahierten Ursprungsadressen und eine Erstellung von mindestens einer Gruppe von Ursprungsadressen, deren geografische Positionen einer gleichen geografischen Zone angehören, um die geografischen Zonen jeweils den Ursprungsadressgruppen zuzuordnen.

3. Verfahren nach Anspruch 1 oder 2, wobei die Liste (Lf) von Gruppen zu filternder Ursprungsadressen weiterhin in Abhängigkeit von Verteilungsquoten erstellt wird, entsprechend maximalen Anteilen von zu filternden Ursprungsadressen für jede geografische Zone.

4. Verfahren nach einem der Ansprüche 1 bis 3, weiterhin umfassend eine Bestimmung einer Topologie zwischen einem Teil der Ursprungsadressen und dem Server, um Ursprungsadressen zu erkennen, die als gefährlich gelten, und um Letztere in die Liste einzuschließen.

5. Vorrichtung (SD) zum Filtern eines Dienstverweigerungsangriffs auf einen Server (SA) in einem Telekommunikationsnetz (RT), umfassend:
Mittel (CAP) zum Erfassen von Anforderungen an den Server,
Mittel (EXT) zum Extrahieren von Ursprungsadressen, von denen die Anforderungen stammen, von mindestens einem Teil der erfassten Anforderungen, wobei die Ursprungsadressen aus Abtastwerten der erfassten Anforderungen extrahiert werden und die Abtastrate in Abhängigkeit von der Anforderungsrate an den Server dynamisch angepasst wird,
Mittel (LOC) zum Zuordnen von geografischen Zonen jeweils zu Gruppen extrahierter Ursprungsadressen und zu Zeitzonenangaben, um die geografischen Zonen zu identifizieren, die sich in einer "wachen" oder "schlafenden" Zone in Bezug auf die Art des von dem Server bereitgestellten Dienstes befinden,
Mittel (DEC) zum Erstellen einer Liste (Lf) von Ursprungsadressen, die in Abhängigkeit von den Ursprungsadressgruppen, die den geografischen Zonen und Zeitzonenangaben zugeordnet sind, der Art des von dem Server bereitgestellten Dienstes und einem Grenzwert (Sf) entsprechend einer Mindestanzahl zu filternder Ursprungsadressen zu filtern sind, um eine Überlastung des Servers (SA) zu vermeiden, und weiterhin in Abhängigkeit von der Sprache des von dem Server bereitgestellten Dienstes,
Mittel (FIL) zum Anwenden von Filterregeln auf die Ursprungsadressen, die in der Liste enthalten sind, um Anforderungen zu blockieren, die von diesen Ursprungsadressen stammen und an den Server gerichtet sind.

6. Computerprogramm, das für die Anwendung in einer Vorrichtung (DF) zum Filtern eines Dienstverweigerungsangriffs auf einen Server (SA) in einem Telekommunikationsnetz (RT) ausgelegt ist, wobei das besagte Programm Befehle umfasst, die, wenn das Programm geladen und in der besagten Vorrichtung ausgeführt wird, folgende Schritte umsetzen:
Erfassen (E1) von Anforderungen an den Server,
Extrahieren (E2) von Ursprungsadressen, von denen die Anforderungen stammen, von mindestens einem Teil der erfassten Anforderungen, wobei die Ursprungsadressen aus Abtastwerten der erfassten Anforderungen extrahiert werden und die Abtastrate in Abhängigkeit von der Anforderungsrate an den Server dynamisch angepasst wird,
Zuordnen (E3) von geografischen Zonen jeweils zu Gruppen extrahierter Ursprungsadressen und zu Zeitzonenangaben, um die geografischen Zonen zu identifizieren, die sich in einer "wachen" oder "schlafenden" Zone in Bezug auf die Art des von dem Server bereitgestellten Dienstes befinden,
Erstellen (E6) einer Liste (Lf) von Ursprungsadressen, die in Abhängigkeit von den Ursprungsadressgruppen, die den geografischen Zonen und Zeitzonenangaben zugeordnet sind, der Art des von dem Server bereitgestellten Dienstes und einem Grenzwert (Sf) entsprechend einer Mindestanzahl zu filternder Ursprungsadressen zu filtern sind, um eine Überlastung des Servers (SA) zu vermeiden, und weiterhin in Abhängigkeit von der Sprache des von dem Server bereitgestellten Dienstes,
Anwenden (E7) von Filterregeln auf die Ursprungsadressen, die in der Liste enthalten sind, um Anforderungen zu blockieren, die von diesen Ursprungsadressen stammen und an den Server gerichtet sind.

## Claims

1. A method for filtering a denial of service attack against a server (SA) delivering a service in a telecommunications network (RT), which method comprises the following steps:
capturing (E1) requests intended for the server,
extracting (E2) from at least some of the captured requests source addresses from which the requests originate, the source addresses being extracted from samples of the captured requests and the sampling rate being dynamically adjusted based on the flow of requests intended for the server,
associating (E3) geographic areas respectively with groups of extracted source addresses and with time zone indications, in order to identify the geographic areas located in an "awake" or "asleep" area with respect to the type of service delivered by the server,
producing (E6) a list (Lf) of source addresses to be filtered based on the groups of source addresses associated with the geographic areas and with time zone indications, on the type of service delivered by the server, and on a threshold (Sf) corresponding to a minimum number of source addresses to be filtered to avoid clogging the server (SA) and additionally based on the language of the service delivered by the server,
applying (E7) filter rules to the source addresses contained in the list in order to block requests from those source addresses that are intended for the server.

2. A method according to claim 1, further comprising locating a geographic position relating to each of the extracted source addresses, and producing at least one group of source addresses in which the geographic positions belong to the same geographic area, in order to associate the geographic areas respectively with groups of source addresses.

3. A method according to claim 1 or 2, wherein the list (Lf) of groups of source addresses to be filtered is also produced based on distribution quotas, corresponding to maximum proportions of source addresses to be filtered for each geographic area.

4. A method according to one of the claims 1 to 3, further comprising determining a topology between some of the source addresses and the server, in order to detect source addresses considered to be dangerous and to include them in the list.

5. A device (SD) for filtering a denial of service attack against a server (SA) in a telecommunications network (RT), comprising:
means (CAP) for capturing requests intended for the server,
means (EXT) for extracting from at least some of the captured requests source addresses from which the requests originate, the source addresses being extracted from samples of the captured requests and the sampling rate being dynamically adjusted based on the flow of requests intended for the server,
means (LOC) for associating geographic areas respectively with groups of extracted source addresses and with time zone indications, in order to identify the geographic areas located in an "awake" or "asleep" area with respect to the type of service delivered by the server,
means (DEC) for producing a list (Lf) of source addresses to be filtered based on the groups of source addresses associated with the geographic areas and with time zone indications, on the type of service delivered by the server, and on a threshold (Sf) corresponding to a minimum number of source addresses to be filtered to avoid clogging the server (SA) and additionally based on the language of the service delivered by the server,
means (FIL) for applying filter rules to the source addresses contained in the list in order to block requests from those source addresses that are intended for the server.

6. A computer program capable of being implemented in a device (DF) to filter a denial of service attack against a server (SA) in a telecommunications network (RT), said program comprising instructions which, when the program is loaded and executed in said device, carry out the following steps:
capturing (E1) requests intended for the server,
extracting (E2) from at least some of the captured requests source addresses from which the requests originate, the source addresses being extracted from samples of the captured requests and the sampling rate being dynamically adjusted based on the flow of requests intended for the server,
associating (E3) geographic areas respectively with groups of extracted source addresses and with time zone indications, in order to identify the geographic areas located in an "awake" or "asleep" area with respect to the type of service delivered by the server,
producing (E6) a list (Lf) of source addresses to be filtered based on the groups of source addresses associated with the geographic areas and with time zone indications, on the type of service delivered by the server, and on a threshold (Sf) corresponding to a minimum number of source addresses to be filtered to avoid clogging the server (SA) and additionally based on the language of the service delivered by the server,
applying (E7) filter rules to the source addresses contained in the list in order to block requests from those source addresses that are intended for the server.
